# EUROPEAN PATENT APPLICATION

(11) **EP 4 748 781 A1**
(43) Date of publication of application: **27.05.2026**
(21) Application number: 24218133.7
(22) Date of filing: 18.11.2024
(51) Int. Cl.: C01B 3/00

(54) **METHODS FOR THE PRODUCTION OF ELECTRICITY AND/OR LIGHT EMISSION**

(62) Divisional of application: 24213662.0
(71) Applicant: Woudenberg, Robert, 4463 LB Goes (NL)
(72) Inventor: Woudenberg, Robert, 4463 LB Goes (NL)

(57) **Abstract**

The present invention introduces novel methods to establish optimal conditions for the PRODUCTION OF ELECTRICITY. These methods utilize extremely strong electric fields at the INTERFACE areas between primary and secondary solids with different work function values. Prescribed high-work-function solids absorb HYDROGEN atoms, which ionize in the INTERFACE area. The strong electric field concentrates HYDROGEN ions in a high density at the INTERFACE. Preferred methods involve increasing the work function of primary solids by absorbing HYDROGEN, thereby strengthening the electric field at the INTERFACE. This high density of HYDROGEN ions at the INTERFACE causes HYDROGEN ions to escape from the surface of the composition of PRIMARY SOLIDs and SECONDARY SOLIDs, creating an abundance of electrons. Escaping HYDROGEN ions recombine at the surface of a suitable CATALYST, reducing the number of electrons in the CATALYST and establishing a potential difference between the composition of PRIMARY SOLIDs and SECONDARY SOLIDs and the CATALYST. An IMPEDANCE between these potentials enables electrons to establish electrical equilibrium, thereby transforming the composite and its associated process into a source of electricity. In the absence or presence of a high IMPEDANCE, a substantial potential difference is established. Discharge reactions occur under the appropriate conditions, emitting light that can serve as a light source or generate additional electrical energy through electrochemical cells.

## Description

### Field of the present invention

The present invention relates to energy generators that carry out a process for the PRODUCTION OF ELECTRICITY and/ or EMITTED LIGHT, more specifically by performing interactions between specific types of MATTER and HYDROGEN and/or HYDROGEN.

### Related patent applications

This application is a divisional application of patent application EP24213662.0, filed on 18 November 2024.

### Definitions

Some terms or words in this document are written in upper case format. Except for the words of the title of present invention, they have specific meanings:

### CATALYST

Catalyst that supports the recombination of HYDROGEN ions and provides electrons required for the recombination process. Preferred catalysts have a high resistance to absorption of HYDROGEN atoms, for EXAMPLE platinum.

### CHARGED PARTICLES

Ions, electrons.

### CONDUCTING SOLID

A solid that allows electrons to pass through easily.

### DIPOLE

Charge dipole composed of migrating electrons and electrons that are freed by local HYDROGEN ionization at an INTERFACE.

### EMITTED LIGHT

Light that is emitted when excited gas atoms decay to lower energy levels.

### EXAMPLE

Examples that are provided for illustrative purposes and should not be construed as limiting the scope of the present invention. It will be understood by those skilled in the art that various modifications, substitutions, and alterations can be made without departing from the spirit and scope of the claimed invention.

### FERMI EQUILIBRIUM REGION

The region where the Fermi levels of PRIMARY SOLIDs and SECONDARY SOLIDs align upon contact at their INTERFACEs.

### HYDROGEN

Protium, Deuterium or Tritium.

### IMPEDANCE

Electrical impedance that either serves as an electrical load that consumes the PRODUCTION OF ELECTRICITY and/or a provision to adjust the amount of EMITTED LIGHT. The electrical impedance may be present outside the overall composition by means of a suitable electrical connection.

### INTERFACE

Contact interface between different MATTERs.

### ISOLATOR

MATTER that prevents the flow of ions and/or electrons.

### MATTER

Matter in the plasma, gas, liquid, or solid state.

### MECHANICAL

Impact by pressure waves, cracking of solid(s) due to expansion by HYDROGEN absorption or shrink due to temperature change and/or desorption of HYDROGEN.

### METAL

Metal element from the periodic table or an alloy thereof.

### PRIMARY SOLID

A CONDUCTING SOLID that has a high ability of absorbing HYDROGEN and has a higher work function value than the work function value of the applied SECONDARY SOLID under similar circumstances. Preferably the PRIMARY SOLID has an increased work function value when it has absorbed HYDROGEN. Both PRIMARY SOLIDs and SECONDARY SOLIDs are part of the same composition and share a common INTERFACE.

### PRODUCTION OF ELECTRICITY

Electricity that is produced by means of released HYDROGEN ions by a PRIMARY SOLID and recombination of them to HYDROGEN supported by a CATALYST that provides the required electrons.

### RECOMBINED

The recombination of HYDROGEN ions with electrons supplied by a CATALYST.

### SECONDARY SOLID

A CONDUCTING SOLID or an n-type semiconductor that has a lower working function compared to the applied PRIMARY SOLID under similar circumstances. Both PRIMARY SOLIDs and SECONDARY SOLIDs are part of the same composition and share a common INTERFACE.

### STIMULI

Any method or combination of methods to deliberately, directly or indirectly, causing accelerating, decelerating or creation of ions and/or accelerating electrons and/or alters the delta work function value at the INTERFACEs of PRIMARY SOLIDs and SECONDARY SOLIDs and/or influences the electric field strength at the INTERFACE.

The following EXAMPLEs are provided:
The use of a power source that generates pulsed and/or high frequency alternating current of electrons;
The use of a power source that generates pulsed and/or high frequency alternating electromagnetic waves;
The use of a heat source generating static and/or dynamic heat supply;
The use of a plasma discharge source;
The use of a high voltage power source;
The use of a source or method that causes MECHANICAL distortion, e.g. by means of piezo electric devices.

Furthermore, the symbols in the figures have following meaning:

**Table 1**

| Symbol: | Meaning: |
|---|---|
| e⁻ | Electrons |
| H | HYDROGEN atoms |
| H⁺ | Positive charged HYDROGEN ions |
| H(N) | Exited HYDROGEN atoms to state N |
| H_{(N-1)} | Exited HYDROGEN atoms to state N-1 |
| G₂ | Gas molecules |
| G⁺ | Positive charged gas ions |
| G(N) | Exited gas atoms to state N |
| G_{(N-1)} | Exited gas atoms to state N-1 |
| S | Atoms of solid matter |

### Background of the present invention

The present invention's prior art relates to EP24213662.0, "methods for the production of energy", filed on 18 November 2024, and is a divisional application to it.

Other publications indicating the existence of escaping charged particles from similar compositions that could serve as a source of electricity were claimed by patent patent application WO2023228630A1 (Ref.2) and US1084989B2 (Ref.3).

The main question Ref.2 and Ref.3 raise is: what causes these charged particles?

The present invention addresses this question and claims structured methods how to produce and harvest them in a reproducible and efficient way for the PRODUCTION OF ELECTRICITY. In addition options to produce EMITTED LIGHT are claimed.

### Supportive literature and prior art

Ref.1 EP24213662.0 methods for the production of energy.

This reference specifies the origin of escaping HYDROGEN ions from a compositions made of PRIMARY SOLIDs and SECONDARY SOLIDs.

Ref.2 Patent application WO2023228630A1*, potential difference generation device.*

This reference relates to the phenomenon of released CHARGED PARTICLES in the case a multilayer of nickel and copper that has been subjected to hydrogen.

The present invention specifies more accurate what causes the release of CHARGED PARTICLES.

Ref.3 Patent application US10841989B2*, gaseous-phase ionizing radiation generator.* This reference supports the phenomenon as claimed by Ref.2.

Ref.4 Contact Potentials, Fermi Level Equilibration, and Surface Charging, Pekka Peljo, José A. Manzanares, and Hubert H. Girault*.*

This reference provides relevant characteristics of an electric DIPOLE within a FERMI EQUILIBRIUM REGION of metal to metal interface area.

Ref.5 Adsorption of hydrogen on nickel single crystal surfaces K. Christmann, O. Schober, G. Ertl, and M. Neumann*.*

This reference relates to the increase of the work function value of nickel when HYDROGEN is absorbed.

Ref.6 Adsorption of hydrogen on palladium single crystal surfaces

*H. Conrad, G. Ertl and E. E. Latta*

This reference relates to the increase of the work function value of palladium when HYDROGEN is absorbed.

Ref.7 Critical fields for ionization of the hydrogen molecule and the molecular hydrogen ion, M. B. Smirnov and V. P. Kranov*.*

This reference describes the required field strength required to ionize hydrogen.

Ref.8 Microwave ionization of hydrogen atoms, Dima Shepelyansky (2012), Scholarpedia, 7(1):9795.

This reference provides information about microwave ionization of hydrogen atoms and serves as an example of suitable STIMULI.

### Assumptions

It is assumed that those skilled in the art have sufficient knowledge and skills to implement and understand the present invention, including:
All references as mentioned in section "Supportive literature and prior art" of the present invention specification;
The ability to replicate implementations specified in above references;
The ability to apply technology required to arrange absorption of HYDROGEN atoms and/or HYDROGEN ions within a FERMI EQUILIBRIUM REGION;
The ability to implement technology to produce suitable STIMULI;
The ability to implement gas discharge methods;
The ability to arrange sufficient safety measures;
The described methods and procedures of the present invention should be performed under the appropriate conditions. Determining such conditions, including the optimal gas temperatures, densities, and distances between compositions, as well as methods to control process of PRODUCTION OF ELECTRICITY or to control the process of EMITTED LIGHT production are out of scope of the present invention and should be determined by those skilled in the art.

### Summary of the present invention

The present invention introduces novel methods and procedures to establish conditions for the PRODUCTION OF ELECTRICITY and/or the production of EMITTED LIGHT, ensuring that the processes are both reproducible and controllable by those skilled in the art. These methods utilize extremely strong electric fields that exists at the INTERFACE areas between PRIMARY SOLIDs and SECONDARY SOLIDs that each have different work function values. PRIMARY SOLIDs allow absorbed HYDROGEN atoms to migrate to the INTERFACE areas, followed by the ionization of HYDROGEN atoms within these areas. The strong electric field will concentrate HYDROGEN ions with an extreme high density at the INTERFACE areas. Preferred methods include the use of PRIMARY SOLIDs whose work function value is increased by the absorption of HYDROGEN and pointy INTERFACE details. Additional STIMULI further improve the ionization and accumulation of HYDROGEN ions. The use of an n-type semiconductor as SECONDARY SOLID will allow for an external electrical voltage supply between PRIMARY SOLIDs and SECONDARY SOLIDs to further enhance the ionization of HYDROGEN atoms at the INTERFACE area. Once the concentration of HYDROGEN ions has surpassed the threshold concentration where escape of HYDROGEN ion will occur, HYDROGEN ions will escape from the surface of the composition of PRIMARY SOLIDs and SECONDARY SOLIDs and move to a nearby CATALYST. The CATALYST facilitates the recombination of HYDROGEN ions by supplying electrons when the ions reach its surface The escape of HYDROGEN ions from the surface of the composition of PRIMARY SOLIDs and SECONDARY SOLIDs creates a surplus of electrons within this composition. The recombination of HYDROGEN ions into HYDROGEN atoms at the surface of the CATALYST will create a reduction of electrons within the composition of the CATALYST. A potential difference between the composition of PRIMARY SOLIDs and SECONDARY SOLIDs and the composition of the CATALYST therefore occurs. An IMPEDANCE allows for harvesting this PRODUCTION OF ELECTRICITY between these two compositions. Absence of an IMPEDANCE or a high IMPEDANCE value connected to both compositions causes the voltage to increase to such high values that gas discharge occurs, causing EMITTED LIGHT under the right conditions. A matching connected IMPEDANCE between these two compositions will arrange the desired ratio between the PRODUCTION OF ELECTRICITY consumed by the IMPEDANCE and/or the production of EMITTED LIGHT by the overall composition. All or some of the recombined HYDROGEN atoms can be reused in the process of PRODUCTION OF ELECTRICITY and/or EMITTED LIGHT.

The methods and procedures of present invention are composed of following steps:
Step 1. The creation of electric DIPOLEs, within INTERFACE areas between suitable PRIMARY SOLIDs and suitable SECONDARY SOLIDs.
Step 2. The absorption of HYDROGEN by mainly or only the PRIMARY SOLIDs.
Step 3. Migration of absorbed HYDROGEN atoms towards the INTERFACE areas where they will be ionized by the strong electric field present.
Step 4. Accumulation of HYDROGEN ions at the INTERFACE areas until the density of HYDROGEN ions surpasses the threshold density that causes escape of HYDROGEN ions from surfaces of the compositions of PRIMARY SOLIDs and SECONDARY SOLIDs.
Step 5a. PRODUCTION OF ELECTRICITY occurs once the HYDROGEN ions escaped from the surfaces of the compositions of PRIMARY SOLIDs and SECONDARY SOLIDs, reach the CATALYST and recombine to HYDROGEN atoms. A potential difference occurs between the composition of the CATALYST and the composition of the PRIMARY SOLID and SECONDARY SOLID. A matching IMPEDANCE closes the electric circuit that has been created by this step.
Step 5b. EMITTED LIGHT is produced when the IMPEDANCE is absent or has a large IMPEDANCE value such that the electrical potential between the composition of the CATALYST and the composition of the PRIMARY SOLID and SECONDARY SOLID increases to such a high value that a gas discharge process occurs between the composition of the CATALYST and the composition of the PRIMARY SOLID and SECONDARY SOLID, producing EMITTED LIGHT. Electrons involved in the discharge process close the electric circuit that has been created by this step.
Step 6: Reuse of the recombined HYDROGEN atoms by have them absorbed by the PRIMARY SOLIDs.

### Brief description of drawings

Figure 1 illustrates the principle of migration of electrons at the INTERFACE area between a PRIMARY SOLID and a SECONDARY SOLID upon contact, caused by the alignment of the Fermi levels of both solids upon contact.
Figure 2 illustrates the electric dipole and the corresponding electric field strength at the INTERFACE area between a PRIMARY SOLIDs and a SECONDARY SOLID whereby both type of solids are CONDUCTING SOLIDs.
Figure 3 illustrates the formation of an area containing a high density HYDROGEN ions and illustrates the increase of the electric dipole and the corresponding increased electric field strength at the INTERFACE area between a PRIMARY SOLID and a SECONDARY SOLID caused by an increased work function value of a preferred PRIMARY SOLID that has absorbed hydrogen.
Figure 4 illustrates the electric dipole and the corresponding electric field at the INTERFACE area between the PRIMARY SOLID and the SECONDARY SOLID whereby the PRIMARY SOLID consist of a CONDUCTING SOLID and the SECONDARY SOLID consist of an n-type semiconductors.
Figure 5 illustrates the formation of an area containing a high density HYDROGEN ions and illustrates the increase of the electric dipole and the corresponding increased electric field strength at the INTERFACE area between a PRIMARY SOLID and a SECONDARY SOLID caused by an increased work function value of a PRIMARY SOLID that has absorbed hydrogen, whereby the PRIMARY SOLID consist of CONDUCTING SOLID and the SECONDARY SOLID consist of an n-type semiconductor.
Figure 6 illustrates an overview of the entire process of the PRODUCTION OF ELECTRICITY.
Figure 7 illustrates an overview of the entire process of the production of EMITTED LIGHT and/or PRODUCTION OF ELECTRICITY when only HYDROGEN is applied.
Figure 8 illustrates an overview of the entire process of the production of EMITTED LIGHT and/or PRODUCTION OF ELECTRICITY when a combination of HYDROGEN and one or multiple different gasses is applied.
Figure 9 illustrates a method to enhance the electric field strength by including pointy INTERFACE details.

### Detailed description of the drawings

A clear understanding of the key advantages of the present invention may be had by reference to the appended drawings, which illustrate the principles of the invention, although it will be understood that such drawings depict preferred embodiments of the invention and, therefore, are not to be considered as limiting its scope with regard to other embodiments which the invention is capable of contemplating. The appended drawings contains compositions that are two dimensional cross section representations of three dimensional models. Accordingly:

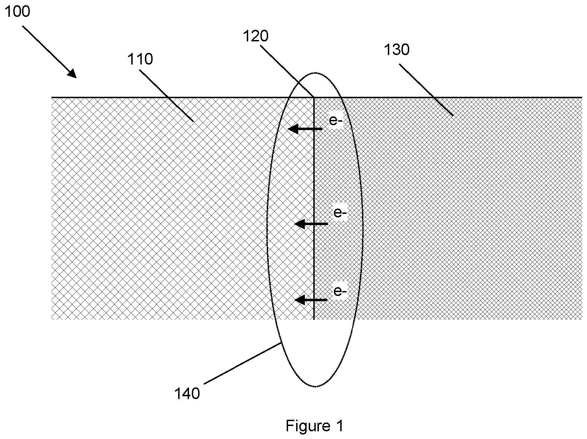

Figure 1 represents a composition 100 of a cross section of a composition of a PRIMARY SOLID 110 and a SECONDARY SOLID 130 interfacing each other at location 120 such that a FERMI EQUILIBRIUM REGION is created by migration of electrons 140 from the SECONDARY SOLID 130 to the PRIMARY SOLID 110 upon contact, initiated by the different work function values of both solids.

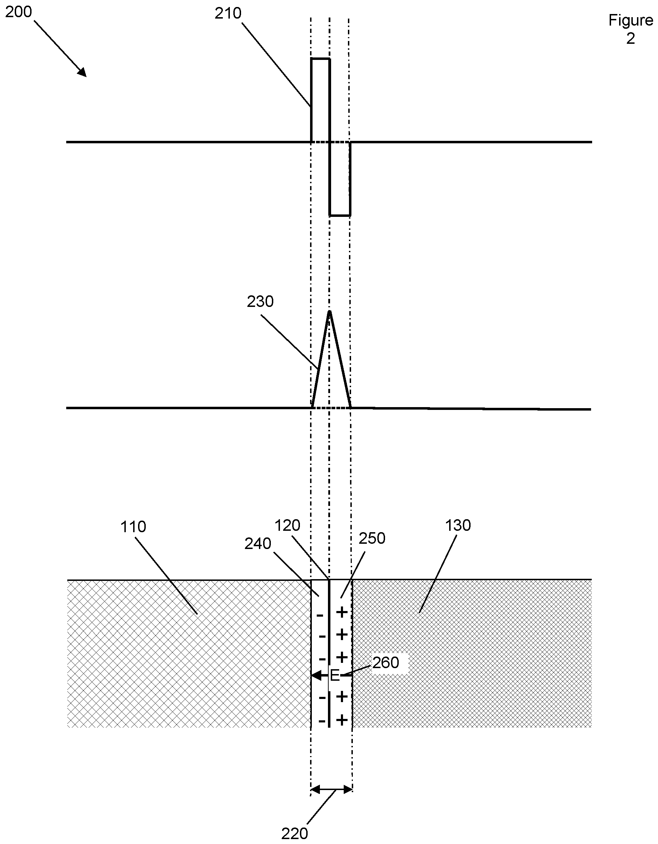

Figure 2 represents a composition 200 to illustrate the density of electrons 210 as a function of position within the FERMI EQUILIBRIUM REGION 220 near the INTERFACE 120, composed of a PRIMARY SOLID 110 and a SECONDARY SOLID 130, whereby both types of solids are CONDUCTING SOLIDs, such that an electric DIPOLE 210 is formed within the FERMI EQUILIBRIUM REGION 220, created by a migration of electrons 140 from from the SECONDARY SOLID 130 to the PRIMARY SOLID 110. This electric DIPOLE causes an electric field E 260 that has an indicative strength distribution 230 within the FERMI EQUILIBRIUM REGION 220. The area that receives the majority of the migrated electrons within PRIMARY SOLID 110 is indicated by 240. The area that supplied the majority of the migrated electrons within SECONDARY SOLID 130 is indicated by 250.

Note that DIPOLE 210 not always consists of a symmetric distribution as indicated. The actual (a)symmetry of its distribution will depend on many factors, e.g. volume ratio between PRIMARY SOLID and SECONDARY SOLID, work function differences between applied PRIMARY SOLIDs and SECONDARY SOLIDs.

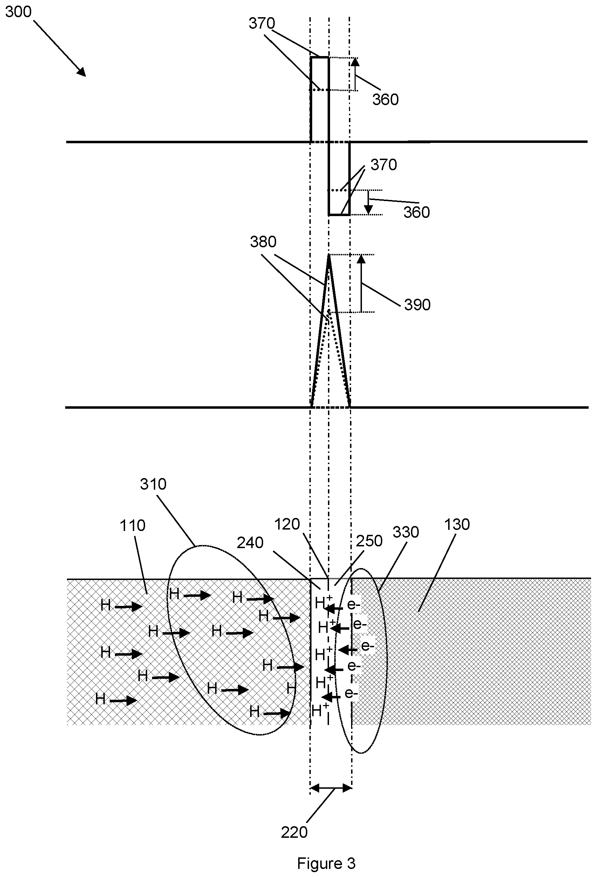

Figure 3 represents the composition 300 to illustrate the formation of an area containing a high density HYDROGEN ions. This effect can be explained by summing up the sequence of consecutive events that cause it:
Event 1: Starting situation is the presence of the electric DIPOLE 210 caused by the INTERFACE between a PRIMARY SOLID 110 and a SECONDARY SOLID 130, whereby both type of solids are CONDUCTING SOLIDs.
Event 2: Once HYDROGEN is being absorbed by mainly the PRIMARY SOLID 110, the migration of HYDROGEN atoms 310 occurs towards the area 240 that has the highest density of electrons within the FERMI EQUILIBRIUM REGION 220.
Event 3: The arrival of migrating HYDROGEN atoms 310 at the INTERFACE 120.
Event 4a: In the case a PRIMARY SOLID is applied whose work function value is not altered by the absorption of HYDROGEN atoms, HYDROGEN atoms, once they have migrated to the INTERFACE area, will be ionized by the electric field when its strength is sufficient.
Event 4b: In the case a PRIMARY SOLID is applied whose work function value increases by the absorption of HYDROGEN atoms when HYDROGEN atoms arrive at the INTERFACE, the increased work function value of such PRIMARY SOLID causes additional migration of electrons 330 from the area of the SECONDARY SOLID 130 that contains the lowest density electrons 250 towards the area 240 that has the highest density electrons within the PRIMARY SOLID 110. The additional migration of electrons cause an increase 360 of the electric DIPOLE 370 and an increases 390 of the electric field strength 380 at the INTERFACE. When the electric field strength is sufficient, HYDROGEN atoms will be ionized. Dynamic electromagnetic field effects will occur, caused by additional migrated electrons as a result of the increased delta work function value which may additionally contribute to the HYDROGEN ionization. These additional migrated electrons are accelerated by the strong electric field at the INTERFACE 120 and gain energy in the order of the delta work function value (~ up to several eV).

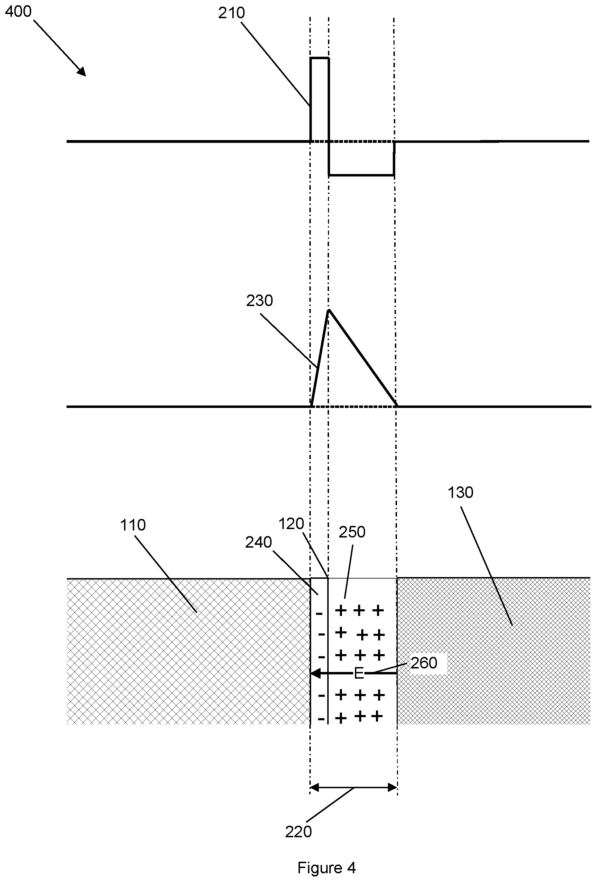

Figure 4 is similar to Figure 2, representing the composition 400 where the SECONDARY SOLID 130 consists of an n-type semiconductor instead of a CONDUCTING SOLID.

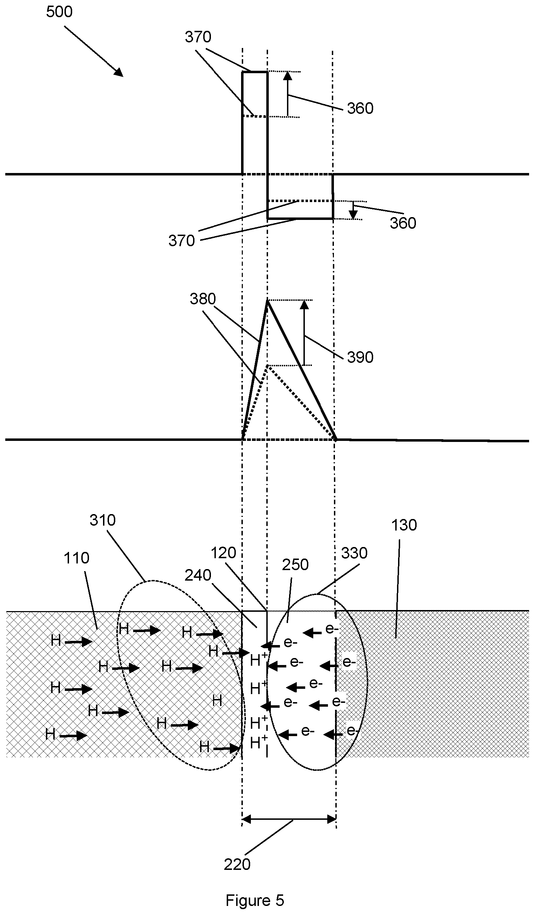

Figure 5 is similar to Figure 3, representing the composition 500 where the SECONDARY SOLID 130 consists of an n-type semiconductor instead of a CONDUCTING SOLID.

Note that Figure 2, Figure 3, Figure 4 and Figure 5 presents simplified graphs of electric DIPOLEs and electric field strength distributions. They serve to illustrate applicable principles.

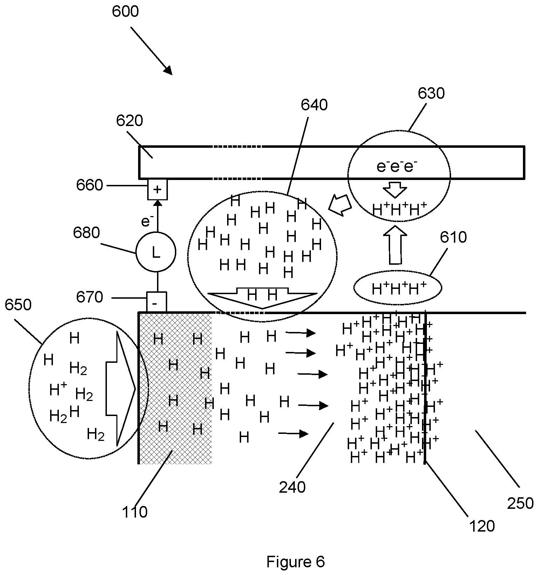

Figure 6 represents the composition 600 illustrating the overall process of the PRODUCTION OF ELECTRICITY, which is assumed to be embedded within an environment that contains only HYDROGEN. The initial source of HYDROGEN 650, that consists of either HYDROGEN molecules, atoms or ions or combinations of each, is absorbed by the PRIMARY SOLID. Absorbed HYDROGEN migrates towards the INTERFACE 120. Once arrived at the INTERFACE 120 HYDROGEN atoms will be ionized and accumulated within the INTERFACE area. Once the density of HYDROGEN ions within the INTERFACE area is high enough, part of the HYDROGEN ions will escape from the surface of the composition of PRIMARY SOLID and SECONDARY SOLID.

Escaped HYDROGEN ions 610 from the surface of the INTERFACE area recombine into HYDROGEN atoms at the surface 630 of a suitable CATALYST 620. The escape of HYDROGEN ions from the composition of PRIMARY SOLID and SECONDARY SOLID and the release of electrons by the compositions of the CATALYST cause a potential difference between these two compositions. The composition of PRIMARY SOLID and SECONDARY SOLID serves as a negative electric terminal 670, providing electrons to the IMPEDANCE. The compositions of the CATALYST serves as a positive electric terminal 660, receiving electrons from the IMPEDANCE. A matching IMPEDANCE 680 provides a return path for electrons to balance the distribution of HYDROGEN ions and electrons in the composition 600. Some or all of the recombined HYDROGEN atoms 640 are reused for the HYDROGEN absorption process by the PRIMARY SOLID.

Note that for clarity Figure 6 only illustrates only the essential processes. Side effects such as possible escaping particles from the applied solids are not indicated.

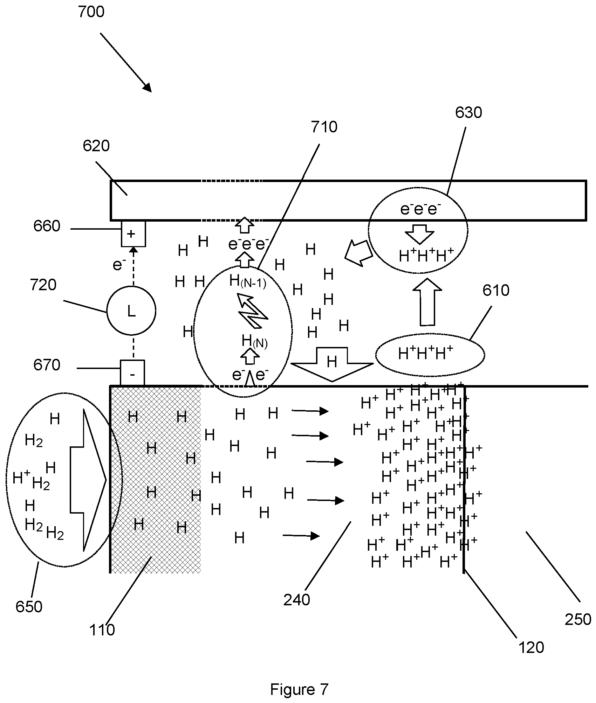

Figure 7 represents the composition 700 illustrating the overall process resulting in the production of EMITTED LIGHT and/or the PRODUCTION OF ELECTRICITY. In specific situations where the IMPEDANCE 720 is absent or has a high value such that it is unable to migrate sufficient electrons fast enough from the negative terminal 670 to the positive terminal 660, the electrical potential between the composition of the CATALYST and the composition of PRIMARY SOLID and SECONDARY SOLID will increase to such high values that HYDROGEN discharge reactions 710 occur under the right conditions. Optional sharp points at the surface of the composition of the of PRIMARY SOLID and SECONDARY SOLID assist in concentrating the electric fields to establish the discharge. In such situation exited HYDROGEN atoms H_{(N)} will emit light when these return to a lower exited state H_{(N-1)} or their ground state.

Note: the IMPEDANCE value of IMPEDANCE 720 should be determined such that the ratio between production of EMITTED LIGHT and/or PRODUCTION OF ELECTRICITY matches the need.

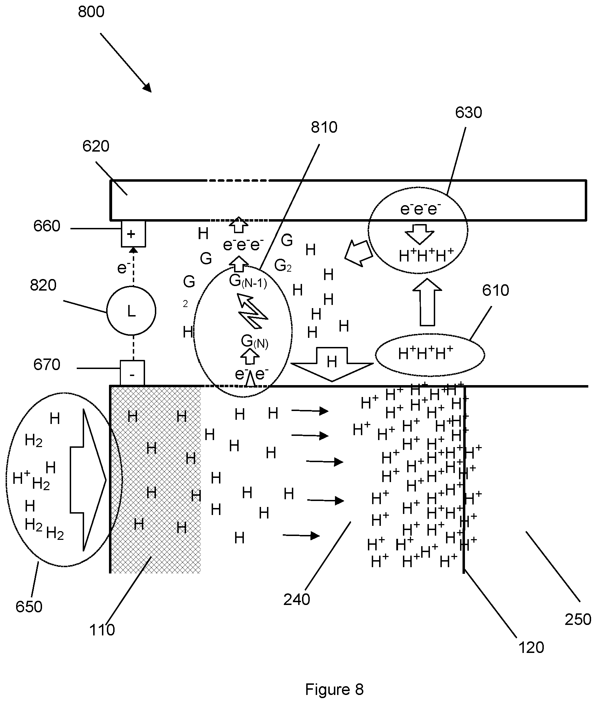

Figure 8 represents the composition 800 illustrating the overall process resulting in EMITTED LIGHT and/or PRODUCTION OF ELECTRICITY where, in addition to HYDROGEN, one or more different gasses are applied, preferably, but not exclusively, noble gasses such as helium or neon. In specific situations where the IMPEDANCE 820 is absent or has a high value such that it is unable to migrate sufficient electrons fast enough, the electrical potential between the composition of the CATALYST and the composition of PRIMARY SOLID and SECONDARY SOLID will increase to such high values that gas discharge reactions 810 occur. In such situation exited HYDROGEN and/or other gas atoms H_{(N)}, G_{(N)}, will emit light when these decay to a lower exited state H_{(N-1)}, G_{(N-1)}, or their ground states.

Note: the value of IMPEDANCE 820 should be determined such that the ratio between production of EMITTED LIGHT and/or PRODUCTION OF ELECTRICITY matches the need.

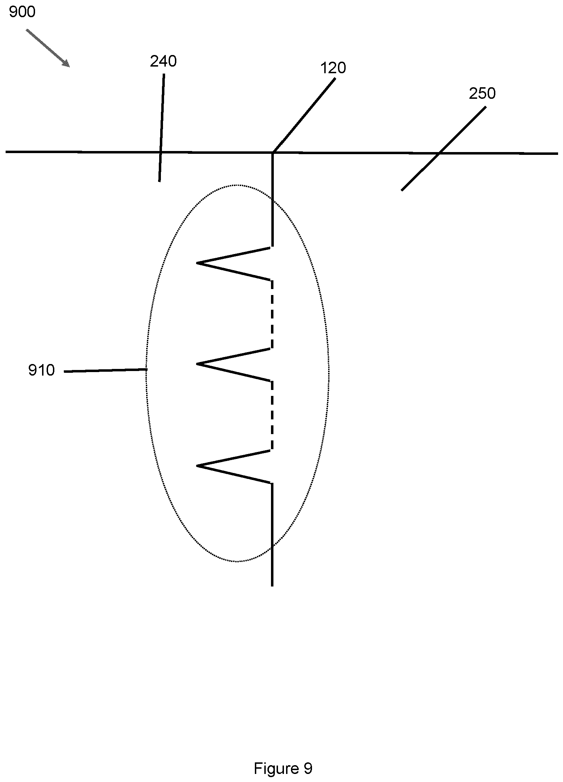

Figure 9 represents the composition 900 illustrating a method to enhance the ionization of HYDROGEN atoms within the INTERFACE area by including pointy INTERFACE details. At the INTERFACE 120 between PRIMARY SOLIDs 110 and SECONDARY SOLIDs 130 pointy details 910 of the applied SECONDARY SOLIDs increase the electrical field strength significantly at the tips of these details.

### Detailed description of the present invention

Methods and procedures are presented that allow for PRODUCTION OF ELECTRICITY and/or the production of EMITTED LIGHT by applying a sequence of consecutive steps.

Areas with extreme high densities of HYDROGEN ions and electrons can be created within the composition of PRIMARY SOLIDs and SECONDARY SOLIDs.

The first step concerns the creation of a strong electric field at the INTERFACE area between a PRIMARY SOLID and a SECONDARY SOLID. Upon contact, electrons very close to the INTERFACE migrate from the solid that has the lowest work function value to the solid that has the highest work function value. This creates an electric DIPOLE and an electric field within the FERMI EQUILIBRIUM REGION at the INTERFACE area.

The second step concerns the absorption of HYDROGEN by at least the preferred PRIMARY SOLIDs.

The third step concerns the ionization of HYDROGEN atoms near the INTERFACE when the electric field strength at the INTERFACE is larger than the threshold value at which absorbed HYDROGEN atoms will be ionized in such situation.

It is preferred to apply PRIMARY SOLIDs, whose work function value increases by the absorption of HYDROGEN. Once HYDROGEN atoms have been absorbed by such preferred PRIMARY SOLID, migrated and arrived at the INTERFACE, an increased work function value of those preferred PRIMARY SOLIDs will be established. See also Ref.5 and Ref.6. Once the work function value of the PRIMARY SOLID(s) increases, while the work function value of the SECONDARY SOLID(s) does not alter in a similar manner, additional electrons will migrate from the SECONDARY SOLID(s) to the PRIMARY SOLID(s), causing an increased electric DIPOLE and an increased electric field strength at the INTERFACE. Migrating electrons will create strong local electromagnetic fields within the INTERFACE area since they will accelerate while traveling through the strong electric field within the INTERFACE area to obtain a new equilibrium.

An EXAMPLE is given of a copper-nickel combination supporting the claim of ionization of HYDROGEN in such situation in general under the right conditions:
The difference between the work function value of nickel and copper is approx. 0.3 ~ 0.7 eV.

The contact potential at a metal-metal junction is typically on the order of the work function value difference. For a nickel-copper interface, the contact potential will be in the range of 0.3 ~ 0.7 V. For a nickel-copper combination specifically, the electric field strength at their INTERFACE would likely be on the order of 10⁶ ~ 10⁹ V/m, assuming no external voltage is applied. The space charge area at such an INTERFACE area would likely be extremely thin, possibly on the order of nanometers or less. The theoretical critical field strength to ionize hydrogen is approximately E ≈ 5.14 × 10¹¹ V/m in vacuum. However, due to quantum effects and other factors, ionization begin to occur at lower electric field strengths under the given circumstances at INTERFACE areas between preferred PRIMARY SOLIDs and SECONDARY SOLIDs. When HYDROGEN is embedded in a nickel lattice, it occupies specific sites called trap sites. These trap sites have a binding energy that affects the ionization process: The binding energy of HYDROGEN to trap sites in nickel is typically around 0.1 ~ 0.3 eV, depending on the type of defect. This binding energy effectively reduces the energy required to ionize the hydrogen atom compared to free hydrogen in a vacuum environment. When HYDROGEN is absorbed within nickel lattice the work function value of nickel increases, therefore increasing the delta work function value. See Ref.5. Successful PRODUCTION OF ELECTRICITY by making use of combinations of copper and nickel as PRIMARY SOLID and SECONDARY SOLID have been reported by Yasuhiro Iwamura and his colleagues, see Ref.2.

A SECONDARY SOLID composed of an n-type semiconductor material offers the option to further increase the electric field strength at the INTERFACE. Suitable n-type semiconductors have a lower work function value than that of CONDUCTING SOLIDs applied as SECONDARY SOLIDs. In addition, a reverse bias voltage applied to the combination of a PRIMARY SOLID and an n-type semiconductor SECONDARY SOLID further increases the electric field strength at the INTERFACE.

Pointy INTERFACE details contribute to further enhancement of the ionization of HYDROGEN atoms. At the INTERFACE 120 between PRIMARY SOLIDs 110 and SECONDARY SOLIDs 130 pointy details 910 of SECONDARY SOLIDs will increase the electrical field strength significantly at the tips of these details.

The fourth step concerns the accumulation of HYDROGEN ions within the INTERFACE area. Each HYDROGEN atom that has been ionized will be attracted towards the area with the highest electron density. The electric field strength at the INTERFACE will not be affected by the ionization of HYDROGEN atoms. The positive HYDROGEN ions and the free electrons that are produced when HYDROGEN atom are ionized will cancel each other out with respect to their contribution to the electrical field at that area. As long as HYDROGEN atoms will migrate to the INTERFACE area the ionization of HYDROGEN atoms will continue and the density of electrons and HYDROGEN ions will continue to increase at the INTERFACE area. At the date of filing of present invention no literature is known that indicates electrons and HYDROGEN ions will recombine in such situation. When required, additional HYDROGEN ionization can be arranged by suitable STIMULI, for example by introducing a strong alternating electromagnetic field area within the INTERFACE, a method of HYDROGEN ionization that generally is known as microwave ionization, see Ref.8.

Note that in preferred applications PRIMARY SOLIDs are applied whose work function value increases when HYDROGEN has been absorbed. An increased work function value will cause an increased electric field strength at the INTERFACE areas which allows for improved HYDROGEN ionization conditions. In some cases the additional migration of electrons due to the altered delta work function value will also contribute to the ionization of HYDROGEN atoms by means of electromagnetic fields caused by the acceleration of electrons that move through the strong electric field in order to create new equilibrium.

The fifth step concerns the PRODUCTION OF ELECTRICITY, the production of EMITTED LIGHT or a combination of the two. PRODUCTION OF ELECTRICITY occurs once the density of HYDROGEN ions has surpassed the threshold density at which HYDROGEN ions escape from the surface near the INTERFACE area. The escape of HYDROGEN ions from the composition of PRIMARY SOLID and SECONDARY SOLID and the release of electrons by the composition of the CATALYST cause a potential difference between these two compositions. The composition of PRIMARY SOLID and SECONDARY SOLID serves as a negative electric terminal, providing electrons. The compositions of the CATALYST serves as a positive electric terminal, receiving electrons. A matching IMPEDANCE provides a return path for electrons to balance the distribution of HYDROGEN ions and electrons in the entire composition. EMITTED LIGHT is produced when the IMPEDANCE is absent or has such a large IMPEDANCE value that the electrical potential between the composition of the CATALYST and the composition of the PRIMARY SOLID and SECONDARY SOLID will increase to such a high value that a gas discharge process occurs between the composition of the CATALYST and the composition of the PRIMARY SOLID and SECONDARY SOLID as long as sufficient escaping HYDROGEN ions occur. The value of the IMPEDANCE regulates therefore the ratio between PRODUCTION OF ELECTRICITY and production of EMITTED LIGHT.

Note that a combination of different gasses in addition to HYDROGEN, preferably, but not restricted to, helium and/or neon, allows for enhancing the EMITTED LIGHT output.

The sixth step concerns the reuse of the recombined HYDROGEN atoms. Recombined HYDROGEN atoms can be reused for absorption by the applied PRIMARY SOLIDs. Preferably the overall composition consists of materials that do not absorb HYDROGEN except for the PRIMARY SOLID.

## Claims

1. Methods and processes for the PRODUCTION OF ELECTRICITY and/or the production of EMITTED LIGHT comprising the following steps:
Step 1. Arrangement of one or multiple INTERFACEs 120 between PRIMARY SOLIDs 110 and SECONDARY SOLIDs 130.
Step 2. Arrangement for absorption of HYDROGEN by mainly the PRIMARY SOLIDs 110.
Step 3. Arrangement for absorbed HYDROGEN atoms to migrate towards and arrive at the INTERFACEs 120.
Step 4. Arrangement for absorbed HYDROGEN atoms to ionize at the INTERFACEs 120.
Step 5. Arrangement for HYDROGEN ions to sufficiently accumulate at the INTERFACEs 120 such that the density of HYDROGEN ions surpasses the threshold density required for enabling HYDROGEN ions to escape from the surface of the INTERFACE areas. The surface of the composition containing the PRIMARY SOLIDs and SECONDARY SOLIDs serves as the negative electric terminal for the PRODUCTION OF ELECTRICITY, providing electrons.
Step 6. Arrangement for HYDROGEN ions to recombine to HYDROGEN atoms at the surface of a suitable CATALYSTs. The surface of the composition of the CATALYSTs serves as the positive electric terminal for the PRODUCTION OF ELECTRICITY, receiving electrons.
Step 7. Arrangement for an IMPEDANCE to be connected to the positive and
negative electric terminals allowing the migration of electrons from the composition of PRIMARY SOLIDs and SECONDARY SOLIDs to the composition of the CATALYSTs.

2. Methods and procedures in accordance with claim 1, wherein PRIMARY SOLIDs are utilized, **characterized by** an increase in their work function value following the absorption of HYDROGEN.

3. Methods and procedures in accordance with claim 1 or 2, wherein the SECONDARY SOLIDs are composed of n-type semiconductors.

4. Methods and procedures in accordance any one of claims 1 to 3 wherein the INTERFACE area contains pointy SECONDARY SOLID structures 910 to enhance the ionization of HYDROGEN atoms at the INTERFACE area.

5. Methods and procedures in accordance any one of claims 1 to 4 wherein all or part of the RECOMBINED HYDROGEN atoms are reused for the absorption of HYDROGEN by the PRIMARY SOLID.

6. Methods and procedures in accordance with any one of claims 1 to 5 wherein HYDROGEN is supplied in the gaseous state.

7. Methods and procedures in accordance with any one of claims 1 to 6 wherein HYDROGEN is supplied in the plasma state.

8. Methods and procedures in accordance with any one of claims 1 to 7 wherein the supplied HYDROGEN is combined with one or multiple different matter in gaseous state, preferably but not limited to one or multiple noble gasses such as helium or neon.

9. Methods and procedures in accordance with any one of claims 1 to 8 wherein STIMULI are applied within the INTERFACE areas to enhance and/or control the accumulation of HYDROGEN ions within the INTERFACE areas.

10. Methods and procedures in accordance with any one of claims 1 to 9 wherein the production of EMITTED LIGHT, produced by means of electrical discharge, is established by means of an adjustable high IMPEDANCE connected between the positive and negative electric terminals 660 and 670, or the absence of such IMPEDANCE.

11. Methods and procedures in accordance with any one of claims 1 to 10 where a combination of PRODUCTION OF ELECTRICITY and production of EMITTED LIGHT is established by means of a matching IMPEDANCE value.

12. Procedure in accordance with claims 10 or 11 wherein EMITTED LIGHT is converted to electricity by means of photovoltaic cells.
